Europäisches Patentamt

(19) European Patent Office

Office européen des brevets

(11) Publication number: **0 080 380**
**A1**

# EUROPEAN PATENT APPLICATION

(21) Application number: **82306266.6**

(22) Date of filing: **24.11.82**

(51) Int. Cl.³: **H 01 M 2/10, H 01 M 2/20**

(30) Priority: **24.11.81 GB 8135356**

(43) Date of publication of application: **01.06.83**
**Bulletin 83/22**

(84) Designated Contracting States: **DE FR GB IT**

(71) Applicant: **Pun, Ching Wa, On Shing Industrial Building 9th Floor, Fo Tan S.T.T.L. No. 7, Shatin New Territories (HK)**
Applicant: **Poon, Ching Chau, On Shing Industrial Building 9th Floor, Fo Tan S.T.T.L. No. 7, Shatin New Territories (HK)**

(72) Inventor: **Pun, Ching Wa, On Shing Industrial Building 9th Floor, Fo Tan S.T.T.L. No. 7, Shatin New Territories (HK)**
Inventor: **Poon, Ching Chau, On Shing Industrial Building 9th Floor, Fo Tan S.T.T.L. No. 7, Shatin New Territories (HK)**

(74) Representative: **Leale, Robin George et al, FRANK B. DEHN & CO. Imperial House 15-19 Kingsway, London WC2B 6UZ (GB)**

(54) **Batteries and battery-operated devices.**

(57) A battery (1) comprises means (4), in this case a screw thread, for mounting a battery-operated device (5) on the battery so that the device makes electrical contact with the battery.

7N139-466

## Batteries and Battery-Operated Devices

This invention relates to batteries and battery-operated devices. The term "battery" as used herein is intended to include single cells as well as assemblies comprising a plurality of cells.

In order to mount conventional batteries in a battery-operated device, such as a torch, it is necessary to provide a compartment to receive and retain the batteries and to provide ancillary means such as one or more springs to ensure that good electrical contact is made with the or each battery.

Viewed from one aspect the present invention provides a battery incorporating means for mounting a battery-operated device thereon so that the device makes electrical contact with the battery.

Such a battery according to the invention eliminates the need to provide a compartment in a battery-operated device to receive one or more batteries. Instead, the device is simply mounted on the battery, the battery being removed and discarded at the end of its useful life. Moreover it is not necessary to provide means such as a spring to bias the battery into electrical contact with the device, as contact may be made as the device is mounted on the battery.

In a preferred embodiment the battery is provided with a male or female screw thread for mating with a corresponding thread provided on the battery-operated device to mount the device on the battery. Alternatively a bayonet fitting or a push fit could be used in place of the screw thread.

Such a screw thread is preferably provided on an end closure member of the battery, such member preferably being gripped by the turned over edge of a tubular electrode of the battery when the latter is a dry battery, whilst itself surrounding a central electrode in the conventional manner of a battery end cover.

When the battery comprises a plurality of cells, one cell preferably incorporates the means for mounting the battery-operated device thereon, for example in the form of a screw thread provided on an end closure member. When the battery-operated device is then mounted on the battery, one electrode of said one cell makes electrical contact therewith. Each of the remaining cells then have the electrode of the same polarity as said one electrode in contact with the electrode of the opposite polarity of another cell.

The scope of the invention also extends to a battery-operated device mounted on at least one battery, preferably by a screw-threaded connection as aforesaid, so that the device makes electrical contact with the or each battery.

The battery-operated device may be a torch head including a light bulb.

It should be clearly understood that reference herein to a battery-operated device being "mounted on" a battery is not intended to imply that the device is above the battery or indeed has any particular positional relationship to it, or that the device is smaller than the battery, or any other similar limitation. The only implication of such term is that the device and the battery are joined together.

In the accompanying drawings:

Figure 1 is a section through a first preferred embodiment of a torch comprising a torch head and a battery according to the invention;

Figure 2 is a cross-section through the torch head shown in Figure 1 in a plane perpendicular to that of Figure 1;

Figure 3 is a section through a second preferred embodiment of a torch comprising a torch head and a battery according to the invention;

Figure 3a shows the free end of a metal contact strip forming part of the embodiment of Figure 3, on an enlarged scale;

Figure 4 shows a modified cover for the batteries of Figure 1 and 3;

Figure 5 is a partial sectional view of a third preferred embodiment of a torch according to the invention, modified as compared with the embodiment shown in Figure 3;

Figure 6 is a view corresponding to that of Figure 5 showing the torch in the 'on' position; and

Figure 7 is an elevation, partly in section, of a source of electrical power, comprising a socket and a battery according to the invention.

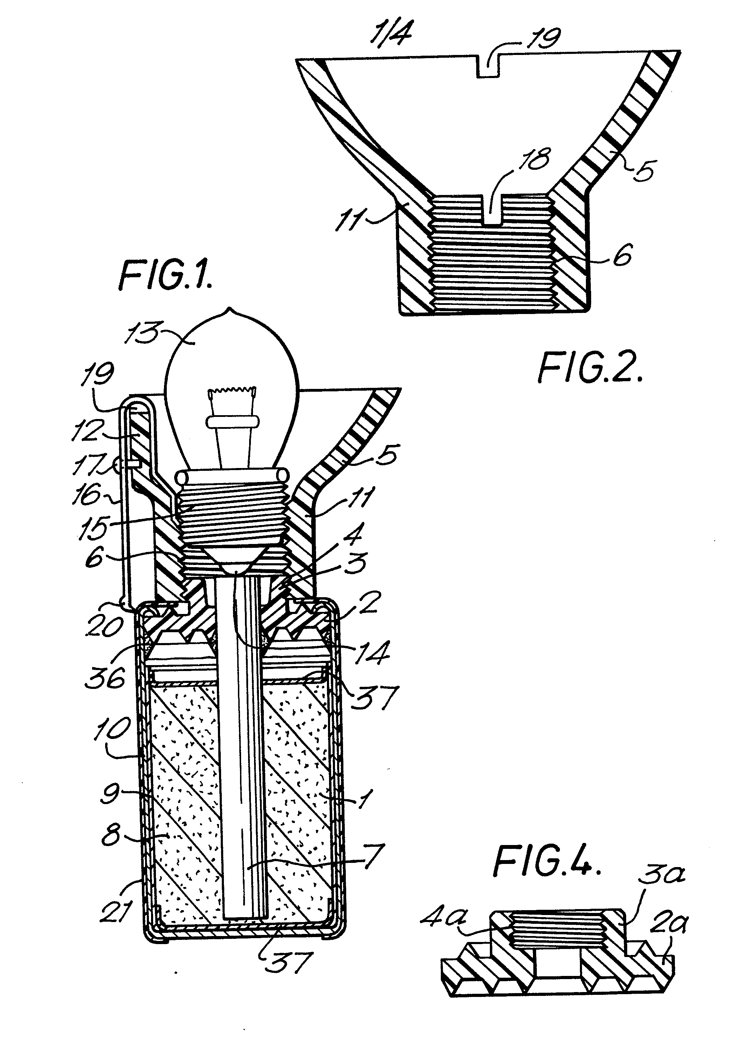

As shown in Figures 1 and 2, a battery 1 comprising a single Leclanché cell includes an end closure member in the form of a plastics cover 2. The cover 2 comprises an upwardly extending collar 3 on which is provided an external screw thread 4. A battery-operated device in the form of a torch head 5 includes an internal screw thread 6 which mates with the screw thread 4 in order to mount the torch head on the battery.

The battery 1 comprises first electrode in the form of a carbon rod 7, a depolariser 8, a layer of paper 9 impregnated with electrolyte and a second electrode in the form of a zinc can 10. The upper end of the zinc can 10 is crimped over the plastics cover 2 which surrounds the carbon rod 7. The plastics cover 2 is sealed to the carbon rod and the zinc can by means of a sealing material 36. Insulating sheets 37 are arranged at the top and bottom of the depolariser. The battery is enclosed in a plastics jacket 21.

The torch head 5 comprises a hollow body 11 having a cylindrical lower portion flaring outwardly with the exception of one flattened face 12 towards the upper rim. The internal screw thread 6 is formed in the cylindrical portion of the body 11. The upper end of the screw thread 6 receives a conventional light bulb 13. A first terminal 14 of the light bulb at the lower end thereof makes direct electrical contact with the carbon rod 7. The second terminal 15 of the light bulb, constituted by the screw thread of the light bulb, makes electrical contact with one end of a conductive metal strip 16. The strip 16 is secured to the body 11 by means of a rivet 17. As shown in Figure 2, the strip 16 is seated in a groove 18 in the screw-threaded portion of the body 11 and passes through a recess 19 in the upper rim of the body 11. The free end of the strip 16 is provided with a pointed projection 20 which extends inwardly, towards the battery.

In order to light the torch, the free end of the strip 16 is pressed inwardly by the user onto the battery, so that the projection 20 pierces the jacket 21 of the battery so as to make electrical contact with the zinc electrode 10. The electrical circuit is thus complete, and the torch remains alight as long as the projection is maintained in contact with the electrode 10.

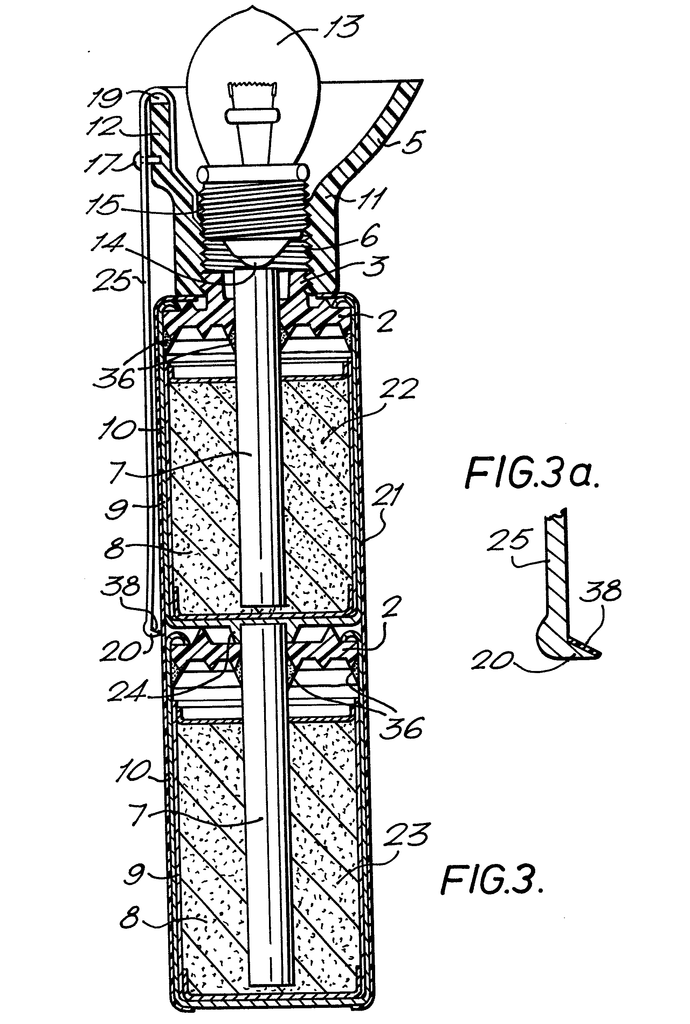

Figure 3 shows a second embodiment of a torch, in which the battery comprises two Leclanche cells 22,23 connected in series. The upper cell 22 differs from the cell 1 shown in Figure 1 in that an annular projection 24 is formed on the underside of the zinc can 10. The annular projection is preferably formed at the same time as the remainder of the zinc can, by extrusion. Whilst a cap or annulus can alternatively be welded to the can, this gives rise to the danger that the projection will not be positioned centrally on the base of the can. This would increase the contact resistance, thus leading to greater power consumption. The lower cell 23 differs from the cell 1 shown in Figure 1 in that the collar 3 is omitted, thus enabling the carbon rod 7 to enter the annular projection 24 and make good electrical contact therewith.

The embodiment of Figure 3 also differs from that of Figure 1 in that the contact strip 25 is extended so that the pointed projection 20 makes contact in use with the upper shoulder of the zinc electrode of the lower cell 23, so that both cells are connected in series with the bulb 13. The upper surface of the projection 20 is also provided with an electrically insulating coating 38 so as to prevent electrical contact accidentally being made between the projection 20 and the zinc electrode of the cell 22.

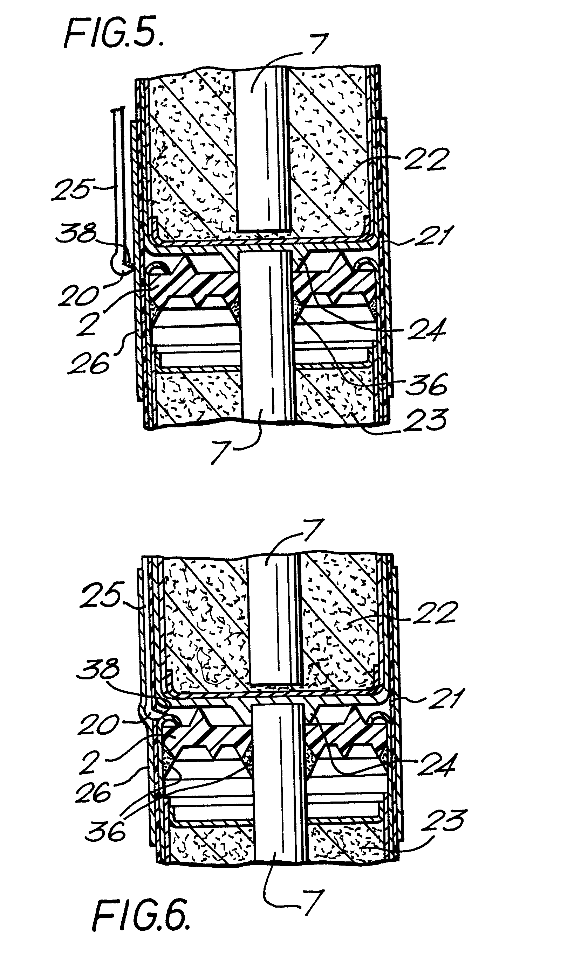

Figure 4 shows a modified plastics cap 2a, intended to be used in place of cap 2, having a collar 3a in which there is formed an internal screw thread 4a. A battery-operated device intended to be mounted on a battery having a cap 2a will, of course, have an external thread corresponding to the internal thread 4a.

Figures 5 and 6 show a modification of the embodiment of Figure 3. This embodiment comprises in addition to the components shown in Figure 3 a slidable resilient plastics sleeve 26 which extends around the jacket 21 in the region of the junction between the two cells of the battery. Figure 5 shows the torch when it is not in use, the free end of the strip 25 being positioned outside the sleeve 26. When it is desired to switch the torch on, the strip 25 is inserted within the sleeve 26, as shown in Figure 6. The projection 20 thus remains in contact with the electrode 10 of the battery without requiring the user to hold the free end of the strip 25 in place.

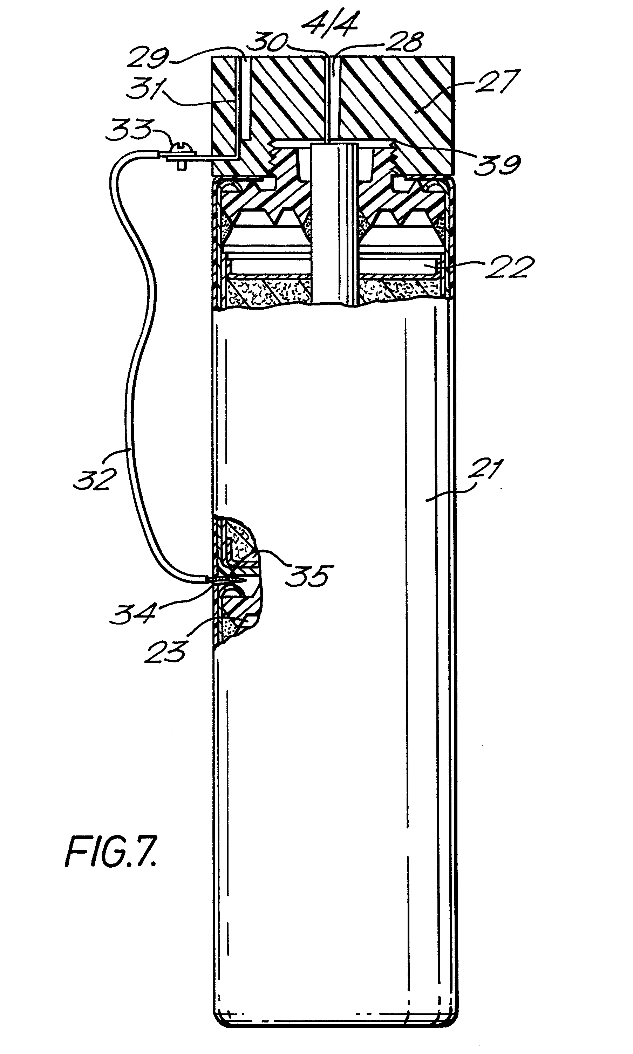

As shown in Figure 7, a socket 27, made of a plastics material, has a female screw thread 39 in the underside thereof to enable the socket to be mounted on a battery in an analogous manner to the torch heads shown in Figures 1 and 3. The socket has a first, axial aperture 28 and a second, offset aperture 29, extending parallel to the aperture 28, therein. These apertures can receive a standard two-pin plug or two separate plug connectors. A first, L-shaped contact strip 30 is positioned in the aperture 28 so as to make contact with a male pin inserted in the aperture 28. The lower arm of the strip is in contact with the carbon electrode of the cell 22. A second, L-shaped contact strip 31 is positioned in the aperture 29 so as to make contact with a male pin inserted in the aperture 29. The lower arm of the strip has a flexible insulated wire 32 connected thereto by welding or by means of a screw 33. The other end of the wire 32 is provided with a piercing connector 34 which has an insulating coating 35 on the upper surface thereof. Thus, when the connector is inserted into the gap between the two cells, the lower surface of the connector makes contact with the lower cell whilst the connector is insulated from the upper cell, even if it comes into contact with the zinc electrode thereof.

It will be appreciated that, whilst the embodiments of Figures 3, 5, 6 and 7 are described as comprising two cells, more than two cells can be utilised, the or each intermediate cell having a plastics cover identical to that of cell 23 and being provided with an annular projection 24 identical to that of cell 22. The contact strip 25 or wire 32 is, of course, extended to permit contact to be made with the cell furthest from the battery-operated device.

Claims

1.    A battery incorporating means (4) for mounting a battery-operated device (5) thereon so that the device makes electrical contact with the battery.

2.    A battery as claimed in claim 1, wherein the means for mounting a battery-operated device thereon comprises a male or female screw thread (4,4a).

3.    A battery as claimed in claim 2, wherein the screw thread is provided on an end closure member (2) which is gripped by a tubular electrode (10) of the battery.

4.    A battery as claimed in any preceding claim, comprising a plurality of cells (22,23), one cell (22) incorporating said means for mounting said battery-operated device thereon so that said device is in contact with one electrode (7) thereof, each of the remaining cells (23) having the electrode of the same polarity as said one electrode in contact with the electrode of the opposite polarity of another cell.

5.    A battery-operated device (5) mounted on at least one battery (1) as claimed in any of claims 1 to 4 so that the device makes electrical contact with the or each battery.

6.    A device as claimed in claim 5, wherein the device makes contact with one electrode (7) of the or a battery as it is mounted thereon and the device comprises a piercing connector (20) for making contact with the other electrode of the battery or an electrode of opposite polarity of another battery by piercing a jacket (21) thereof.

7.    A device as claimed in claim 5 or 6, wherein the device comprises a torch head including a light bulb, one terminal of the light bulb making contact with one electrode of the battery.

8.    A device as claimed in claim 5 or 6, wherein the device comprises a socket adapted to receive two male pins.

0080380

FIG.2.

FIG.1.

FIG.4.

FIG.3.

FIG.3a.

0080380

3/4

FIG.5.

FIG.6.

0080380

4/4

FIG.7.

**European Patent Office**

## EUROPEAN SEARCH REPORT

Application number

EP 82 30 6266

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| X | US-A-3 332 805 (W.C.THOMPSON) *The whole document* | 1,2,3, 4,5,7 | H 01 M 2/10 H 01 M 2/20 |
| X | US-A-2 826 681 (H.R.C.ANTHONY AND H.G.F.WAUSAU) *Figures 1-3; column 3, lines 47-54; column 4, lines 32-44* | 1,2,4, 5,7 | |
| X | FR-A-1 006 422 (H.HAHN) *Figure 11; page 2, right-hand column, line 55 - page 4, left-hand column, line 24, figure 13; page 4, left-hand column, line 36 - right-hand column, line 23, figure 14; claim 1,C* | 1,2,5, 7 | |
| X | FR-A-2 400 264 (CHING WA PUN AND C.C.POON) *Figure 1; page 3, line 33 - page 4, line 1* | 1,2 | TECHNICAL FIELDS SEARCHED (Int. Cl. 3) H 01 M 2/10 H 01 M 2/20 H 01 M 6/44 |
| Y | DE-C- 371 888 (H.WOLFF) *Figure 3, page 2, lines 2-32 and lines 56-61* | 8 | |
| Y | GB-A- 11 155 (G.L.PATTERSON) *Page 1, line 23 - page 2, line 6; figures 1-2* | 8 | |
| | --- -/- | | |

The present search report has been drawn up for all claims

| Place of search THE HAGUE | Date of completion of the search 02-03-1983 | Examiner D'HONDT J.W. |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82

# European Patent Office

## EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| Y | US-A-2 225 460 (H.W.PORTH) *Figure 11; page 2, lines 15-29* | 8 | |
| A | GB-A-1 447 503 (CROMPTON PARKINSON) *Page 4, lines 45-50; figures 1,2,5* | 6 | |
| A | GB-A- 230 377 (H.GEBHARDT) *Figure 6; page 2, lines 53-91* | 8 | |
| A | FR-A-1 271 830 (SONOTONE CORP.) *Figure 9, page 20, right-hand column, line 45 - page 21, left-hand column, line 9* | 1,2,4, 5,7 | |
| A | US-A-2 093 983 (H.ROTHENBERG) | | TECHNICAL FIELDS SEARCHED (Int. Cl. 3) |

The present search report has been drawn up for all claims

| Place of search THE HAGUE | Date of completion of the search 02-03-1983 | Examiner D'HONDT J.W. |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03 82